# FASCICULE DE BREVET EUROPEEN

(11) **EP 3 057 852 B1**
(45) Date de publication et mention de la délivrance du brevet: **27.06.2018**
(21) Numéro de dépôt: 14784289.2
(22) Date de dépôt: 15.09.2014
(51) Int. Cl.: B62D 25/20, B62D 21/06

(54) **STRUCTURE DE CHASSIS POUR VÉHICULE AUTOMOBILE THÉRMIQUE OU ÉLÉCTRIQUE**
KAROSSERIESTRUKTUR FÜR EIN KRAFTFAHRZEUG MIT EINER WÄRMEKRAFTMASCHINE ODER EIN ELEKTROMOTORFAHRZEUG
CHASSIS STRUCTURE FOR A MOTOR VEHICLE WITH A HEAT ENGINE OR AN ELECTRIC MOTOR VEHICLE

(30) Priorité: 14.10.2013 FR 1359929
(43) Date de publication de la demande: 24.08.2016
(73) Titulaire: Renault S.A.S., 92100 Boulogne-Billancourt (FR)
(72) Inventeur: CAILLARD, Jerome, F-91190 Gif sur Yvette (FR); GAUMONT, Herve, F-78140 Velizy (FR); HLUBINA, Thierry, F-92372 Chaville (FR)
(86) Numéro de dépôt international: PCT/FR2014/052289
(87) Numéro de publication internationale: WO 2015/055909

(56) Documents cités:
- DE-A1- 19 627 610
- DE-A1-102007 002 676
- DE-A1-102011 112 180
- JP-A- 2013 163 470
- US-B1- 8 534 748

## Description

L'invention concerne une structure de châssis pour véhicule automobile thermique ou électrique.

Le châssis d'un véhicule supporte et assemble tous les organes mécaniques du véhicule tout en assurant une protection de ces organes ainsi que des passagers en cas d'accident.

L'invention concerne plus particulièrement une structure de châssis comprenant deux longerons latéraux, généralement appelés bavolets, sensiblement parallèles reliés entre eux par plusieurs traverses.

Dans un véhicule électrique ou thermique équipé d'un châssis de ce type, la batterie est située sous le plancher, le moteur étant conséquemment situé en arrière du véhicule par rapport à la batterie. La position des réservoirs d'énergie (batterie ou réservoir à carburant) peut être différente (entre deux traverses) en fonction des volumes d'encombrement de chacun de ces systèmes.

Du fait de ces emplacements de la batterie et du réservoir à carburant entre des traverses différentes du châssis, l'utilisation d'un même châssis pour les deux types de véhicule est problématique en termes de respect des critères d'intégrité de la structure. Le châssis doit en effet pouvoir absorber l'énergie transmise en cas de chocs, tels que des chocs longitudinaux (choc frontal ou arrière) ou latéraux (choc poteau) sans se déformer. Or, l'espace entre traverses occupé normalement par le réservoir à carburant reste vacant lorsqu'un châssis de véhicule thermique est utilisé pour un véhicule électrique, ce qui peut générer une faiblesse structurelle. Un tel espace peut également rester vacant lors de l'utilisation d'un même châssis pour des véhicules de différentes longueurs.

Ainsi, en cas de choc frontal subi par un véhicule comportant un tel espace vacant, les efforts dus au choc sont transmis le long des longerons de l'avant vers l'arrière du véhicule, mais des efforts inverses remontent longitudinalement au centre du véhicule du fait de la masse du moteur situé à l'arrière. Ces efforts en sens inverses peuvent provoquer un cisaillement du plancher et un arrachement de points de soudure de ce dernier. Un phénomène similaire de cisaillement peut être observé en cas de choc latéral.

Le document DE 10 2001 112180 A1 décrit une structure de châssis de véhicule automobile comprenant deux longerons reliés par des traverses, la structure de châssis comprenant une croix rigide métallique reliant deux traverses adjacentes, ladite croix rigide comportant deux branches rectilignes croisées.

Il existe un besoin pour un châssis présentant une meilleure capacité à absorber les chocs sans se déformer, même en présence d'un espace vacant entre deux traverses, permettant ainsi son utilisation pour des véhicules de longueurs différentes et/ou de moyens de propulsion différents.

A cet effet, l'objet de l'invention concerne une structure de châssis de véhicule automobile en métal comprenant deux longerons reliés par des traverses, caractérisée en ce qu'elle comprend une croix rigide métallique reliant deux traverses adjacentes, ladite croix rigide comportant deux branches rectilignes croisées et quatre extrémités libres, deux des extrémités libres étant fixées rigidement sur l'une desdites deux traverses adjacentes, les deux autres extrémités étant fixées rigidement sur l'autre desdites deux traverses adjacentes.

Un tel agencement de structure de châssis permet une meilleure répartition des efforts subis par la structure en cas de choc permettant ainsi de réduire les zones de faiblesse de la structure de châssis en réduisant les risques de cisaillement, notamment au niveau d'un plancher solidaire de la structure de châssis.

Par exemple un effort longitudinal provenant de la poussée d'une masse sur l'une des traverses reliées par la croix rigide sera transmis obliquement par les branches de la croix à l'autre traverse et aux longerons. De manière similaire, un effort transversal dû à un choc latéral subi par l'une des traverses reliées par la croix rigide sera transmis obliquement par l'une des branches de la croix à l'autre traverse.

L'invention permet en outre de réaliser une structure de châssis présentant un meilleur comportement en cas de choc avec un nombre réduit de pièces et pour un coût faible.

Enfin, la croix rigide permet d'améliorer la résistance aux chocs d'une structure de châssis sans modification des autres éléments de celle-ci. Selon l'invention, ladite croix rigide est disposée de sorte que le point d'intersection de ses deux branches soit situé sur une ligne longitudinale médiane de la structure ou à faible distance de cette ligne, perpendiculairement à celle-ci, par exemple à une distance inférieure ou égale à 150mm. Ceci peut permettre une répartition plus homogène des efforts subis en fonction des types de châssis.

La position de fixation des extrémités libres des branches peut être conditionnée par l'architecture de la structure et les différents éléments voisins.

Avantageusement et de manière non limitative, les deux branches de la croix rigide peuvent être perpendiculaires ou sensiblement perpendiculaires. Un tel croisement à 90° peut faciliter la liaison entre les branches, notamment une liaison par cordon de soudure.

Avantageusement et de manière non limitative, les deux branches forment un angle dont la bissectrice peut être parallèle ou sensiblement parallèle aux longerons de ladite structure de châssis. Les deux branches de la croix rigide peuvent être de même longueur ou de longueur différente.

Avantageusement et de manière non limitative, une plaque de rigidification peut être fixée sur les branches de ladite croix rigide, ladite plaque étant centrée sur le point d'intersection desdites branches. Ceci peut notamment permettre de maintenir les deux branches de la croix dans un même plan lorsque la structure subit des efforts, autrement dit de réduire les risques de flambage des branches rectilignes en cas de choc.

Pour une meilleure transmission des efforts entre les deux traverses reliées par la croix rigide, il est avantageux que les deux branches de la croix rigide s'étendent dans un même plan.

A cet effet, une première branche de la croix peut par exemple être formée d'une unique barre, une deuxième branche de la croix rigide étant formée de deux barres dont une extrémité est fixée rigidement à ladite première branche.

On peut également envisager que chaque branche soit formée de deux barres fixées rigidement entre elles.

En variante, chaque branche de la croix rigide peut être formée d'une unique barre, au moins une des barres comportant un logement pour recevoir l'autre barre.

Les branches de la croix rigide peuvent être formées d'une ou plusieurs barres creuses ou pleines. Toutefois, afin de réduire le poids de la croix rigide, il est avantageux d'utiliser des barres creuses.

Avantageusement et de manière non limitative, les branches de la croix rigide peuvent être formées d'une ou plusieurs barres de section rectangulaire, ceci peut permettre d'améliorer la transmission des efforts.

La raideur de la croix rigide pourra être adaptée en fonction de la forme de section de ses branches et/ou de la dimension de cette section, et/ou de l'épaisseur du métal en cas de section creuse.

Avantageusement, la croix rigide peut être en acier, par exemple en acier inoxydable, à haute résistance mécanique.

Afin de permettre un montage et un démontage aisé, la croix rigide peut être fixée aux traverses par des vis. Un montage définitif (par exemple par soudure) peut toutefois également être envisagé.

Avantageusement, la croix rigide peut être fixée sur les traverses, sous la structure de châssis, autrement dit du côté de la structure de châssis disposé en regard du sol lorsque la structure de châssis est montée sur un véhicule. La croix rigide est alors fixée dans une zone facile d'accès lors de l'assemblage du véhicule, qui ne nécessite pas de modification des autres éléments de la structure de châssis.

Avantageusement, la croix rigide est fixée à une traverse dite traverse de parclose et à la traverse adjacente en direction de l'avant du véhicule, ou encore traverse centrale. La traverse de parclose supporte par exemple une partie du moteur d'un véhicule électrique.

L'invention concerne également un véhicule automobile, notamment électrique ou thermique, équipé d'une structure de châssis selon l'invention. Notamment, la croix rigide de la structure de châssis est avantageusement disposée sous la structure de châssis du véhicule automobile.

Avantageusement, l'espace entre les traverses auxquelles est fixée la croix rigide est libre, notamment dépourvu d'organe de type réservoir à carburant.

Le véhicule équipé d'une structure de châssis selon l'invention peut être un véhicule électrique, notamment de grande longueur, ou un véhicule thermique de grande longueur.

L'invention est maintenant décrite en référence aux dessins annexés, non limitatifs, dans lesquels :
- la figure 1 est vue schématique de dessous d'un véhicule automobile équipé d'une structure de châssis selon un mode de réalisation de l'invention, sur laquelle sont représentés les efforts subis en cas de choc frontal ;
- la figure 2 est une vue schématique similaire à la figure 1 sur laquelle sont représentés les efforts subis en cas de choc latéral;
- la figure 3 est une vue agrandie en perspective de la partie de la structure de châssis de la figure 1 portant la croix rigide,
- la figure 4 est une vue de dessous en perspective de la croix rigide représentée figure 3.

Dans la présente description, les termes avant, arrière, supérieur, inférieur, font référence aux directions avant et arrière, supérieure, inférieure de la structure de châssis, lesquelles correspondent aux directions avant et arrière, supérieure, inférieure du véhicule lorsque la structure de châssis est montée sur le véhicule. Les axes X, Y, Z, correspondent respectivement à l'axe longitudinal (d'avant en arrière), transversal et vertical du véhicule et de la structure de châssis montée sur le véhicule.

Par sensiblement horizontal, longitudinal ou vertical, on entend une direction/un plan formant un angle d'au plus ±20°, voire d'au plus ±10° avec une direction/un plan horizontal, longitudinal ou vertical.

Par « sensiblement parallèle ou perpendiculaire », on entend une direction/un plan formant un angle d'au plus ±10°, voire d'au plus ±5° ou d'au plus ±1° avec une direction/un plan parallèle ou perpendiculaire.

Par « fixé rigidement », on entend qu'aucun mouvement n'est possible entre la croix rigide et les traverses.

Par « croix rigide », on entend une croix dont les branches sont fixées rigidement en leur point d'intersection.

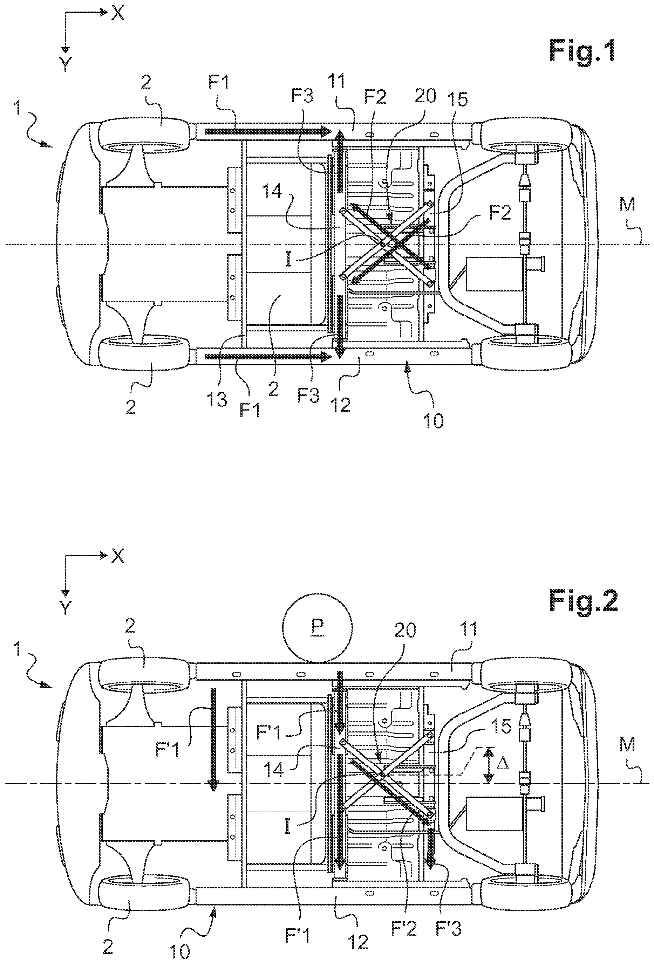

Les figures 1 et 2 représentent, vue de dessous, un véhicule automobile 1 équipé d'une structure de châssis 10.

Cette structure de châssis 10, en métal, comprend deux longerons 11, 12 reliés par des traverses 13, 14, 15. Le véhicule 1 représenté est à propulsion électrique et comprend une batterie 2 disposée entre les traverses 13 et 14 et les longerons 11, 12. La batterie 2 est ainsi protégée par ces éléments de la structure de châssis 10. L'espace entre les traverses 14 et 15 est vacant.

La structure de châssis 10 comprend en outre une croix rigide métallique 20 reliant deux traverses adjacentes 14, 15. Cette croix est par exemple en acier de nuance HX260YD (norme EN 10346).

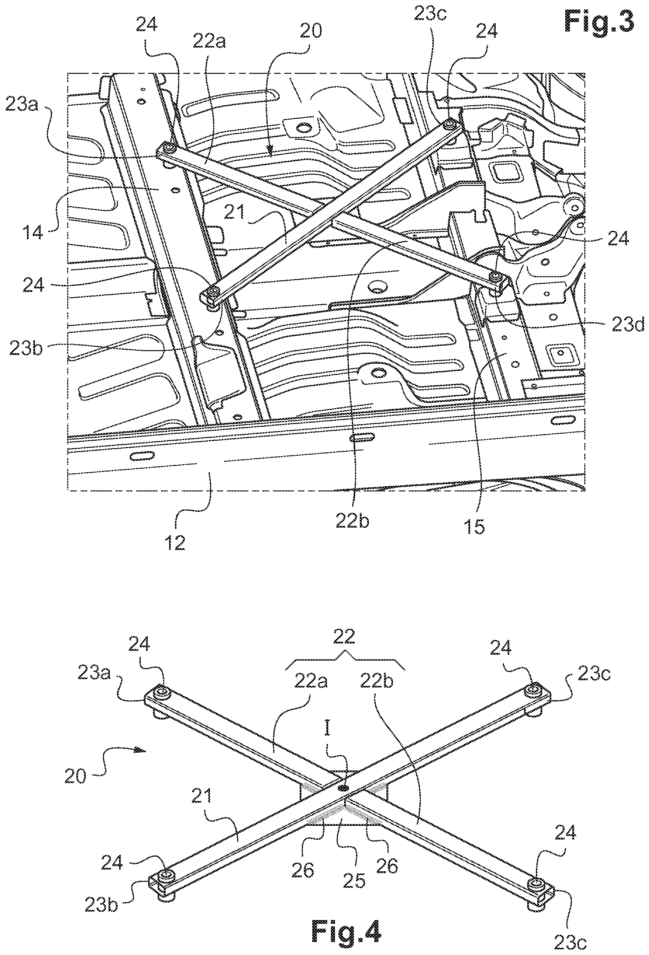

Tel que représenté plus en détails sur les figures 3 et 4, cette croix rigide 20 comporte deux branches rectilignes 21, 22 et quatre extrémités libres 23a, 23b, 23c, 23d. Deux des extrémités libres 23a, 23b sont fixées rigidement sur la traverse 14 et les deux autres extrémités 23c, 23d sont fixées rigidement sur la traverse 15. A cet effet, les extrémités 23a-23d sont fixées sur les traverses 14 et 15 par des vis 24, permettant un montage/démontage aisé.

Dans l'exemple représenté, les deux branches 21, 22 de la croix rigide 20 sont de longueur différente, la croix 20 étant disposée de sorte que le point d'intersection I de ses deux branches soit situé sur une ligne longitudinale médiane M (figure 1) de la structure de châssis 10 ou à faible distance (Δ≤ 150mm) de cette ligne longitudinale médiane M (figure 2). En outre, la bissectrice de l'angle formé par les deux branches 21, 22 peut être confondue avec cette ligne longitudinale médiane M ou parallèle à celle-ci. Autrement dit, la bissectrice peut être parallèle aux longerons 11, 12 et le centre d'intersection I des deux branches 21, 22 peut être équidistant des deux longerons 11, 12 ou bien, le point d'intersection I des deux branches 21, 22 peut être décalé transversalement d'une distance Δ par rapport à la ligne longitudinale médiane M, tel que représenté sur la figure 2, laquelle ne diffère de la figure 1 que par la position de ce point d'intersection I.

Ces deux branches 21, 22 s'étendent en outre dans un même plan, lequel est parallèle ou sensiblement parallèle au plan formé par les longerons 11, 12 et les traverses 14, 15. Dans l'exemple, la croix rigide 20 est ainsi formée d'une première branche 21 et d'une deuxième branche 22 en deux portions 22a, 22b dont les extrémités sont soudées à la première branche 21, sur toute leur périphérie.

Pour éviter le flambage des branches 21, 22 en cas de choc, la croix rigide 20 comprend en outre une plaque de rigidification 25 fixée sur les branches 21, 22 et centrée sur le point d'intersection I de ces branches. Cette fixation peut être réalisée par des cordons de soudure 26 entre chaque branche 21, 22 et la plaque de rigidification 25. Une telle fixation par soudure peut être facilitée par un angle de 90° entre les branches 21, 22. L'angle entre les branches 21, 22 pourra cependant être différent de 90° pourra dépendre de la distance entre les traverses 14 et 15 et des possibilités de fixation des branches 21, 22 sur ces traverses.

En variante non représentée, la plaque de rigidification 25 peut être fixée aux branches 21, 22 par des vis ou rivets.

Tel que visible sur la figure 4, les branches 21, 22 sont des barres creuses de section rectangulaire, ce qui permet d'obtenir une bonne résistance aux efforts et une bonne transmission des efforts pour un poids relativement faible.

La structure de châssis 10 ainsi obtenue présente une bonne résistance aux efforts en cas de choc frontal ou arrière ou en cas de choc latéral, malgré l'absence d'organe entre les traverses 14 et 15. Le chemin suivi par ces efforts est symbolisé par des flèches sur les figures 1 et 2.

Les flèches de la figure 1 indiquent le chemin suivi par les efforts en cas de choc frontal (par le côté gauche de la figure 1). Les efforts remontent depuis les longerons 11, 12 et par la poussée des roues avant 2 en passant par les bavolets vers l'arrière du véhicule suivant les flèches F1. Du fait de la masse du véhicule située à l'arrière, des efforts F2 remontent de l'arrière du véhicule vers l'avant obliquement via les branches de la croix rigide 20 et sont ensuite renvoyés latéralement le long de la traverse 14 vers les bavolets (flèches F3), zones relativement rigides, limitant ainsi un cisaillement des zones de plancher situées entre les traverses 14, 15.

Les flèches de la figure 2 indiquent le chemin suivi par les efforts en cas de choc latéral de type choc poteau P. Les efforts s'exercent alors suivant les flèches F1' transversalement au véhicule depuis le longeron 11 en direction du longeron 12 opposé en passant par les traverses 13 et 14 situées à proximité du point d'impact. Une partie des efforts subis par la traverse 14 sont transmis via l'une des branches de la croix rigide 20 suivant la flèche F'2 vers l'autre traverse 15, moins sollicitée lors du choc, qu'ils suivent ensuite (flèche F'3) jusqu'au longeron 12. Cela permet d'homogénéiser le transfert d'effort entre les trois traverses 13, 14, 15 et de réduire les zones de cisaillement transversal entre les deux traverses 14, 15.

## Revendications

1. Structure de châssis (10) de véhicule automobile (1) en métal comprenant deux longerons (11, 12) reliés par des traverses (14, 15), la structure de châssis comprenant une croix rigide (20) métallique reliant deux traverses adjacentes (14, 15), ladite croix rigide comportant deux branches rectilignes croisées (21, 22) et quatre extrémités libres (23a-23d), deux des extrémités libres (23a, 23b) étant fixées rigidement sur l'une (14) desdites deux traverses adjacentes, les deux autres extrémités libres (23c, 23d) étant fixées rigidement sur l'autre (15) desdites deux traverses adjacentes **caractérisée en ce que** ladite croix rigide (20) est disposée de sorte que le point d'intersection (I) de ses deux branches (21, 22) soit situé sur une ligne longitudinale médiane (M) de la structure de châssis ou à faible distance de cette ligne longitudinale médiane (M), perpendiculairement à celle-ci.

2. Structure de châssis (10) selon l'une des revendications 1 ou 1, **caractérisée en ce que** les deux branches (21, 22) présentent au moins une des caractéristiques suivantes :
- les deux branches (21, 22) sont perpendiculaires ou sensiblement perpendiculaires,
- les deux branches (21, 22) forment un angle dont la bissectrice est sensiblement parallèle aux longerons de ladite structure de châssis.

3. Structure de châssis (10) selon l'une des revendications 1 ou 2, **caractérisée en ce qu'**une plaque de rigidification (25) est fixée sur les branches (21, 22) de ladite croix rigide (20), ladite plaque (25) étant centrée sur le point d'intersection (I) desdites branches.

4. Structure de châssis (10) selon l'une des revendications 1 à 3, **caractérisée en ce que** les deux branches (21, 22) de la croix rigide s'étendent dans un même plan.

5. Structure de châssis (10) selon la revendication 4, **caractérisée en ce qu'**une première branche (21) de la croix est formée d'une unique barre, une deuxième branche (22) de la croix rigide étant formée de deux barres (22a, 22b) dont une extrémité est fixée rigidement à ladite première branche (21).

6. Structure de châssis (10) selon la revendication 4, **caractérisée en ce que** chaque branche de la croix rigide est formée d'une unique barre, au moins une des barres comportant un logement pour recevoir l'autre barre.

7. Structure de châssis (10) selon l'une des revendications 1 à 6, **caractérisée en ce que** les branches (21, 22) de la croix rigide (20) sont formées d'une ou plusieurs barres creuses ou pleines, par exemple de section rectangulaire.

8. Structure de châssis (10) selon l'une des revendications 1 à 7, **caractérisée en ce que** la croix rigide (20) est fixée aux traverses par des vis (24).

9. Véhicule automobile (1) équipé d'une structure de châssis (10) selon l'une des revendications précédentes.

## Patentansprüche

1. Metallische Fahrgestellstruktur (10) eines Kraftfahrzeugs (1), die zwei Längsträger (11, 12) enthält, die durch Querträger (14, 15) verbunden sind, wobei die Fahrgestellstruktur ein steifes Metallkreuz (20) aufweist, das zwei benachbarte Querträger (14, 15) verbindet, wobei das steife Kreuz zwei gekreuzte geradlinige Arme (21, 22) und vier freie Enden (23a-23d) aufweist, wobei zwei der freien Enden (23a, 23b) steif an einem (14) der zwei benachbarten Querträger befestigt sind, während die zwei anderen freien Enden (23c, 23d) steif am anderen (15) der zwei benachbarten Querträger befestigt sind, **dadurch gekennzeichnet, dass** das steife Kreuz (20) so angeordnet ist, dass der Schnittpunkt (I) seiner zwei Arme (21, 22) sich auf einer Mittellängslinie (M) der Fahrgestellstruktur oder in geringem Abstand zu dieser Mittellängslinie (M) lotrecht zu dieser befindet.

2. Fahrgestellstruktur (10) nach einem der Ansprüche 1 oder 1, **dadurch gekennzeichnet, dass** die zwei Arme (21, 22) mindestens eines der folgenden Merkmale aufweisen:
- die zwei Arme (21, 22) sind lotrecht oder im Wesentlichen lotrecht,
- die zwei Arme (21, 22) bilden einen Winkel, dessen Winkelhalbierende im Wesentlichen parallel zu den Längsträgern der Fahrgestellstruktur ist.

3. Fahrgestellstruktur (10) nach einem der Ansprüche 1 oder 2, **dadurch gekennzeichnet, dass** eine Versteifungsplatte (25) an den Armen (21, 22) des steifen Kreuzes (20) befestigt ist, wobei die Platte (25) auf den Schnittpunkt (I) der Arme zentriert ist.

4. Fahrgestellstruktur (10) nach einem der Ansprüche 1 bis 3, **dadurch gekennzeichnet, dass** die zwei Arme (21, 22) des steifen Kreuzes sich in der gleichen Ebene erstrecken.

5. Fahrgestellstruktur (10) nach Anspruch 4, **dadurch gekennzeichnet, dass** ein erster Arm (21) des Kreuzes von einer einzigen Stange gebildet wird, während ein zweiter Arm (22) des steifen Kreuzes von zwei Stangen (22a, 22b) gebildet wird, von denen ein Ende steif am ersten Arm (21) befestigt ist.

6. Fahrgestellstruktur (10) nach Anspruch 4, **dadurch gekennzeichnet, dass** jeder Arm des steifen Kreuzes aus einer einzigen Stange gebildet wird, wobei mindestens eine der Stangen eine Aufnahme aufweist, um die andere Stange aufzunehmen.

7. Fahrgestellstruktur (10) nach einem der Ansprüche 1 bis 6, **dadurch gekennzeichnet, dass** die Arme (21, 22) des steifen Kreuzes (20) aus einer oder mehreren hohlen oder massiven Stangen, zum Beispiel mit rechtwinkligem Querschnitt, gebildet werden.

8. Fahrgestellstruktur (10) nach einem der Ansprüche 1 bis 7, **dadurch gekennzeichnet, dass** das steife Kreuz (20) durch Schrauben (24) an den Querträgern befestigt ist.

9. Kraftfahrzeug (1), das mit einer Fahrgestellstruktur (10) nach einem der vorhergehenden Ansprüche ausgestattet ist.

## Claims

1. Chassis structure (10) for a motor vehicle (1) made of metal, comprising two side members (11, 12) connected by crossmembers (14, 15), the chassis structure comprising a rigid metal crosspiece (20) connecting two adjacent crossmembers (14, 15), said rigid crosspiece comprising two intersecting rectilinear arms (21, 22) and four free ends (23a-23d), two of the free ends (23a, 23b) being rigidly attached to one (14) of said two adjacent crossmembers, the other two free ends (23c, 23d) being rigidly attached to the other (15) of said two adjacent crossmembers, **characterized in that** said rigid crosspiece (20) is arranged such that the point of intersection (I) of its two arms (21, 22) is located on a central longitudinal line (M) of the chassis structure or at a short distance from this central longitudinal line (M) perpendicular thereto.

2. Chassis structure (10) according to either of Claims 1 and 1, **characterized in that** the two arms (21, 22) have at least one of the following features:
- the two arms (21, 22) are perpendicular or substantially perpendicular,
- the two arms (21, 22) form an angle, the bisector thereof being substantially parallel to the side members of said chassis structure.

3. Chassis structure (10) according to either of Claims 1 and 2, **characterized in that** a stiffening plate (25) is attached to the arms (21, 22) of said rigid crosspiece (20), said plate (25) being centered on the point of intersection (I) of said arms.

4. Chassis structure (10) according to one of Claims 1 to 3, **characterized in that** the two arms (21, 22) of the rigid crosspiece extend in the same plane.

5. Chassis structure (10) according to Claim 4, **characterized in that** a first arm (21) of the crosspiece is formed from a single bar, a second arm (22) of the crosspiece is formed from two bars (22a, 22b), one end thereof being rigidly attached to said first arm (21).

6. Chassis structure (10) according to Claim 4, **characterized in that** each arm of the rigid crosspiece is formed from a single bar, at least one of the bars comprising a housing for receiving the other bar.

7. Chassis structure (10) according to one of Claims 1 to 6, **characterized in that** the arms (21, 22) of the rigid crosspiece (20) are formed from one or more hollow or solid bars, for example of rectangular section.

8. Chassis structure (10) according to one of Claims 1 to 7, **characterized in that** the rigid crosspiece (20) is attached to the crossmembers by screws (24).

9. Motor vehicle (1) provided with a chassis structure (10) according to one of the preceding claims.
